# EUROPÄISCHE PATENTSCHRIFT

(11) **EP 0 909 908 B1**
(45) Veröffentlichungstag und Bekanntmachung des Hinweises auf die Patenterteilung: **10.09.2003**
(21) Anmeldenummer: 98119478.0
(22) Anmeldetag: 15.10.1998
(51) Int. Cl.: F16G 13/06

(54) **Rollenkette (Gelenkkette)**
Roller chain (link chain)
Chaîne à rouleaux (chaîne à maillons articulés)

(30) Priorität: 15.10.1997 DE 29718235 U
(43) Veröffentlichungstag der Anmeldung: 21.04.1999
(73) Patentinhaber: ERICH WULF UND SOHN GmbH & Co. KG, D-59889 Eslohe-Kückelheim (DE)
(72) Erfinder: Wilke, Hermann,Dipl.-Ing., 59889 Eslohe (DE)
(74) Vertreter: Fritz, Edmund Lothar, Dipl.-Chem.

(56) Entgegenhaltungen:
- EP-A- 0 601 469
- DE-A- 4 410 388
- DE-U- 29 514 700
- DE-U- 29 718 235
- GB-A- 2 103 303
- US-A- 5 562 558

## Beschreibung

Die vorliegende Erfindung betrifft eine Rollenkette mit den Merkmalen nach dem Oberbegriff des Anspruchs 1.

Um den Wartungsaufwand für solche Rollenketten zu minimieren, ist man im allgemeinen bestrebt, die gelenkige Lagerung weitgehend wartungsfrei zu gestalten. Gemäß Stand der Technik bekannt sind weitgehend wartungsfreie Rollenketten, die eine gelenkige Verbindung mittels lebensdauergeschmierter Nadellager realisieren.

Eine Rollenkette der eingangs genannten Art ist aus dem Gebrauchsmuster DE 295 14 700.8 bekannt. Es beschreibt eine Rollenkette, bei der die Außenlaschen mittels Nadellagern gelenkig gelagert sind. Um die Nadellager bei Anwendungen im Außenbereich vor Verschmutzungen zu schützen und um ein Austreten der Schmiermittel des Nadellagers zu verhindern, umfasst diese Rollenkette eine vergleichsweise aufwendige Dichtungs- und Deckelkonstruktion. Die zwischen den Innenlaschen auf den Bolzen gelagerte Laufrolle, in die eine Laufbuchse eingepresst ist, erfordert zum Schutz der Laufbuchse eine gleichermaßen aufwendige Dichtungskonstruktion.

Das der vorliegenden Erfindung zugrunde liegende Problem besteht in der Konzeption einer weitgehend wartungsfreien Rollenkette, die eine konstruktive und fertigungstechnische Vereinfachung gegenüber dem Stand der Technik bietet.

Dies wird erfindungsgemäß durch eine Rollenkette gemäß Anspruch 1 erzielt.

Weitgehend wartungsfrei ist eine Rollenkette nach der vorliegenden Erfindung durch die gelenkige Lagerung der Innenlaschen mittels Lagermitteln die vorzugsweise als Nadellager oder Rollenlager ausgeführt sind, die zum einen leichtgängig sind, zum anderen auch im Dauerbetrieb keine Schmierung und damit Wartungsarbeiten benötigen. Die Anbringung der Lagermittel an den Innenlaschen bewirkt im Gegensatz zur Anbringung an den Außenlaschen eine Vereinfachung des Dichtaufwands, weil die Lagermittel innen geschützter vor Außeneinflüssen sind.

Die Dichtung der Lagermittel erfolgt mittels Dichtmitteln, die in Verbindung mit den Außenlaschen und der Laufrolle eine vollständige Kapselung der Lagermittel bewirken. Auf diese Weise kann auf zusätzliche Dichtungsmaßnahmen, wie zum Beispiel Gehäusedeckel, vollständig verzichtet werden. Eine Rollenkette nach der vorliegenden Erfindung ist bei Reduzierung der Einzelteile gegenüber dem vorgenannten Stand der Technik wesentlich vereinfacht.

Vorzugsweise können die Lagermittel als Nadellager oder Rollenlager ausgeführt sein, die vorzugsweise eingepresst sind.

Vorteilhafterweise können die Dichtmittel einen Distanzring umfassen, der zwischen Innenlasche und Außenlasche eingesetzt wird. Eine vorteilhafte Ausführung kann vorsehen, dass die Außenlaschen fest auf die Bolzen aufgepresst sein können. Insbesondere können die Außenlaschen mittels Sicherungsringen gesichert werden.

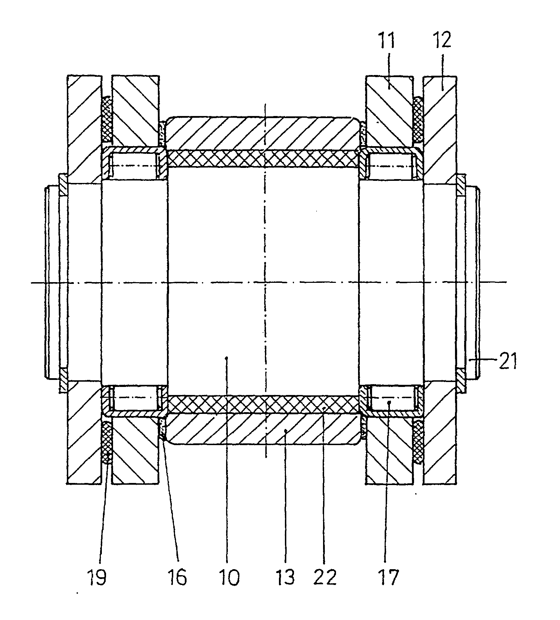

Im folgenden wird ein Ausführungsbeispiel der Erfindung unter Bezugnahme auf die beiliegende Zeichnung beschrieben. Diese zeigt einen Querschnitt entlang einer Bolzenachse.

Die Rollenkette ist zusammengesetzt aus Bolzen 10, die abwechselnd durch ein Paar Innenlaschen 11 und durch ein Paar Außenlaschen 12 gelenkig zu einer Kette verbunden sind. Zwischen den Innenlaschen 11 ist eine Laufrolle 13 gelagert.

Während die Außenlaschen 12 fest auf den Bolzen 10 aufgepresst sind, sind die Innenlaschen 11 drehbar auf den Bolzen 10 mittels als Nadellager 17 ausgeführten Lagermitteln, die mit ihrem Außenring in einen Bohrung der Innenlasche 11 eingepresst sind, gelagert. Anstelle von Nadellagern 17 können auch Rollenlager Verwendung finden.

Zwischen jeder Innenlasche 11 und Außenlasche 12 ist ein als Distanzring 19 ausgeführtes Dichtmittel gelagert. Der Distanzring 19 dient sowohl der Fixierung des Abstandes als auch der Abdichtung des Ringspaltes zwischen Innenlasche 11 und Außenlasche 12.

In die Laufrolle 13 ist eine wartungsfreie Laufbuchse 22 eingepresst. Zur Abdichtung des Ringspaltes zwischen Innenlaschen 11 und Laufrolle 13 sind zwischen diesen jeweils ein als Anlaufscheibe 16 ausgeführtes Dichtmittel vorgesehen.

Die Außenlaschen 12 werden mittels Sicherungsringen 21, die in eine Ringnut im Endbereich des Bolzens 10 eingreifen, gesichert.

## Patentansprüche

1. Rollenkette bestehend aus Bolzen (10), die gelenkig abwechselnd durch ein Paar Innenlaschen (11) und durch ein Paar Außenlaschen (12) verbunden sind, wobei jeweils ein Paar der Laschen fest mit den Bolzen (10) verbunden und das andere Paar mittels Lagermittel drehbar auf den Bolzen (10) gelagert ist, wobei auf den Bolzen (10) zwischen den Innenlaschen (11) jeweils eine Laufrolle (13) gelagert ist, wobei in die Laufrolle (13) eine wartungofreie Laufbuchse (22) eingepresst ist, wobei weiterhin die Rollenkette Dichtmittel umfasst, die eine Kapselung der Lagermittel bewirken, wobei weiterhin die Rollenkette Anlaufscheiben (16) zwischen den Innenlaschen (11) und der Laufrolle (13) umfasst und wobei die Anlaufscheiben (16) zur Abdichtung des Ringspaltes zwischen den Innenlaschen (11) und der Laufrolle (13) dienen, **dadurch gekennzeichnet, dass** die Innenlaschen (11) auf den Bolzen (10) mittels der Lagermittel gelagert sind und dass die Anlaufscheiben (16) von den Dichtmitteln umfasst sind und zur Kapselung der Lagermittel beitragen.

2. Rollenkette nach Anspruch 1, **dadurch gekennzeichnet, dass** die Lagermittel als Nadellager (17) oder Rollenlager ausgeführt sind, die vorzugsweise eingepresst sind.

3. Rollenkette nach einem der Ansprüche 1 oder 2, **dadurch gekennzeichnet, dass** die Dichtmittel Distanzringe (19) umfassen, die zwischen den Innenlaschen (11) und den Außenlaschen (12) eingesetzt sind.

4. Rollenkette nach einem der Ansprüche 1 bis 3, **dadurch gekennzeichnet, dass** die Außenlaschen (12) fest auf die Bolzen (10) aufgepresst sind.

5. Rollenkette nach einem der Ansprüche 1 bis 4, **dadurch gekennzeichnet, dass** die Außenlaschen (12) mittels Sicherungsringen (21) gesichert sind.

## Claims

1. Roller chain consisting in bolts (10), that are joined alternatively articulated by means of a pair of inner butt-straps (11) and by means of a pair of outer butt-straps (12), in which each pair of butt-straps is tightly fixed with the bolt (10) and the other pair is pivoted on the bolt (10) by means of bearing blocks, in which one roller (13) respectively is supported over the bolt (10) between the inner butt-straps (11), one maintenance-free bushing (22) in the roller (13) being pressed-in, the roller chain comprising furthermore sealing means, that causes an encapsulation of the bearing blocks, the roller chain comprising a washer (16) between the inner butt-straps (11) and the roller (13), and in which the washer (16) serves to seal the annular gap between the butt-straps (11) and the roller (13), **characterised in that** the butt-straps (11) are bedded over the bolt (10) by means of the bearing blocks and that the washer (16) is grasped by the sealing means and contributes to the encapsulation of the bearing blocks.

2. Roller chain according to claim 1, **characterised in that** the bearing blocks are executed as needle bearing (17) or roller bearing that are preferably pressed in.

3. The roller chain according to one of the claims 1 or 2, **characterised in that** the sealing means include spacer rings (19), that are arranged between the butt-straps (11) and the outer butt-straps (12).

4. The roller chain according to one of the claims 1 to 3, **characterised in that** the outer butt-straps (12) are pressed tightly on the bolts (10).

5. The roller chain according to one of the claims 1 to 4, **characterised in that** the outer butt-straps (12) are secured by means of rings (21).

## Revendications

1. Chaîne de rouleaux constituée de boulons (10), qui sont reliés, alternativement articulé, par une paire de languettes internes (11) et par une paire de languettes externes (12), une paire de languettes respectivement étant reliée fixement aux boulons (10) et l'autre paire appuyée par des paliers tournant sur les boulons (10), s'appuyant sur le boulon (10) respectivement un rouleau-guide (13) entre les languettes internes (11), étant pressée dans le rouleau-guide (13) une douille de cours (22) ne nécessitant pas d'entretien, la chaîne á rouleaux comprenant en outre des moyens étanches, qui provoquent un encaissement des paliers, la chaîne á rouleaux comprenant en outre des rondelles de démarrage (16) entre les languettes internes (11) et le rouleau-guide (13), dont les rondelles de démarrage (16) servent au tamponnage de la fissure annulaire entre les languettes internes (11) et le rouleau-guide (13) , **caractérisé en ce que** les languettes internes (11) sont appuyées sur les boulons (10) moyennant des paliers et que les rondelles de démarrage (16) sont recouvertes par des moyens étanches et contribuent a l'encaissement des paliers.

2. Chaîne de rouleaux selon la revendication 1, **caractérisé en ce que** les paliers sont exécutés comme palier d'aiguille (17) ou des paliers de rouleaux, qui sont préférablement pressés dedans.

3. Chaîne de rouleaux selon une des revendications 1 ou 2, **caractérisé en ce que** les moyens étanches comprennent des anneaux de distance (19), qui sont disposés entre les languettes internes (11) et les languettes externes (12).

4. Chaîne de rouleaux selon une des revendications 1 à 3, **caractérisé en ce que** les languettes externes (12) sont pressées fixement sur les boulons (10).

5. Chaîne de rouleaux selon une des revendications 1à 4, **caractérisé en ce que** les languettes externes (12) sont assurées moyennant des rondelles d'arrêt (21).
